# EUROPEAN PATENT APPLICATION

(11) **EP 4 087 260 A1**
(43) Date of publication of application: **09.11.2022**
(21) Application number: 21172222.8
(22) Date of filing: 05.05.2021
(51) Int. Cl.: H04N 21/4223, H04N 21/422, H04N 21/44, H04N 21/439, H04N 21/45, H04N 21/8541, H04N 21/8405

(54) **PERSONALIZING INSTRUCTIONAL VIDEO**

(71) Applicant: Koninklijke Philips N.V., 5656 AG Eindhoven (NL)
(72) Inventor: BOS, Colin, 5656 AE Eindhoven (NL); KRANS, Jan Martijn, 5656 AE Eindhoven (NL); DE RUYTER, Boris Emmanuel Rachmund, 5656 AE Eindhoven (NL); LEMMENS, Paul Marcel Carl, 5656 AE Eindhoven (NL)
(74) Representative: de Vries, Janna

(57) **Abstract**

According to an aspect, there is provided a method for personalizing an instructional video. The method comprises: acquiring sensor data associated with at least one of a food preparation session of a user and a calibration session of the user or of an environment of the user; determining, based on the sensor data, one or more first characteristics; acquiring user input data associated with one or more second characteristics; generating or updating a user profile based on the acquired sensor data and user input data, the user profile includes one or more profile characteristics, the one or more profile characteristics including at least a first characteristic and a second characteristic; acquiring at least one scene of an instructional video; and modifying one or more aspects of the at least one acquired scene based on the user profile.

## Description

### FIELD OF THE INVENTION

The present disclosure relates to a method and a system for personalizing an instructional video.

### BACKGROUND OF THE INVENTION

The number of digital applications that support users in finding and preparing food recipes has continuously increased in the last decade. Popular cooking applications have many downloads (more than 5 million per app) and often receive high ratings from users (>4.5 out of 5). Generally, these cooking applications let users view recipes from different categories, from breakfast to dessert, from Italian to Indian cuisine, from carnivore to vegetarian. Preparation of recipes is often described extensively. Some apps use text with pictures to illustrate the steps of preparation, while others use short videoclips of around 1-2 minutes to highlight the preparation steps and results.

Furthermore, real-time recipe preparation support from online chefs and/or extended instruction videos is receiving more attention in the last few years. In these long-format videos for instance, a user can watch a video of a cook preparing a meal during the entire preparation process. Accordingly, for a recipe that takes around 35 minutes to prepare, the corresponding video would also last around 35 minutes (without any fast-forwarding). Long-format preparation videos that are displayed in the kitchen during meal preparation are arguably the most helpful for users, as they would be given sufficient time to perform the actions required, without having to pause or re-watch certain steps (as is the case with other forms of media).

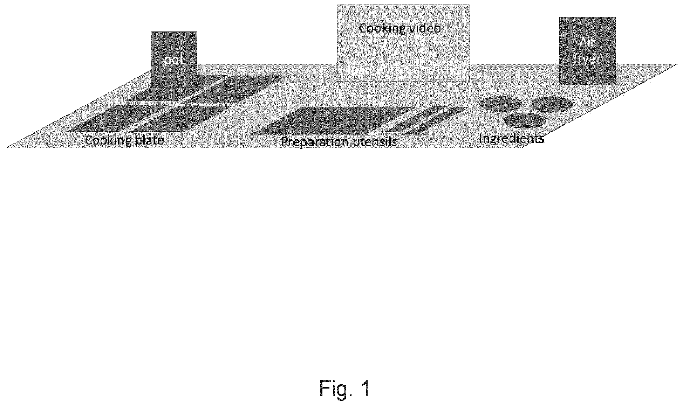

Fig. 1 shows a schematic representation of a meal preparation area, which includes an interactive device for providing relevant instructions. In order for a user to follow cooking instructions in real-time while preparing the meal, the video is typically played in the kitchen area.

### SUMMARY OF THE INVENTION

There are a number of disadvantageous associated with currently available techniques that provide users with food preparation instructions. Long format videos generally describe the preparation of recipes in a single way (i.e. with a specific ingredient set and with specific steps carried out in a specific sequence of scenes, each taking a specific amount of time). Although this specific video script may serve a certain proportion of the user base for real-time guidance, some users may find such format difficult due to variation in cooking skills and abilities. For instance, some users may take much more time to prepare a meal, and specifically to carry out certain parts of the recipe (e.g. cutting, marinating, etc.), compared to a professional chef in a video. Also, in some cases, users may not have exactly the same type of cooking appliances and/or utensils required for the recipe.

Furthermore, there may also be users who have allergies or dislike certain ingredients, and these users may wish to change certain aspects of the recipe to suit to their allergies and preferences. Currently, users are expected to implement such change themselves without necessarily knowing whether they are implementing the recipe changes correctly.

It would therefore be advantageous to provide a technique for automatically adapting cooking video content and/or script in accordance to characteristics or profile of a user. Such personalized cooking guidance videos would eliminate the need for users to pause videos often during meal preparation and allow removal of certain parts of videos that are not applicable to the preferences of certain users.

According to a first specific aspect, there is provided a computer-implemented method for personalizing an instructional video.

The method comprises:
acquiring sensor data associated with at least one of a food preparation session of a user and a calibration session of the user or of an environment of the user;
determining, based on the sensor data, one or more first characteristics, the one or more first characteristics including at least one of:
   food preparation device available to the user, a food preparation utensil available to the user, a technique applied by the user for a food preparation action, a time spent by the user for a food preparation action, an emotional status of the user, and an environmental status of the user; acquiring user input data associated with one or more second characteristics, the one or more second characteristics including at least one of: a food allergy of the user, a dietary preference of the user, an ingredient preference of the user, a preferred portion size of the user, a food preparation device available to the user, a food preparation utensil available of the user, a desired cooking skill level, and a previous user input;
   generating or updating a user profile based on the acquired sensor data and user input data, the user profile including one or more profile characteristics, the one or more profile characteristics including at least a first characteristic and a second characteristic;
   acquiring at least one scene of an instructional video;
   and modifying one or more aspects of the at least one acquired scene based on the user profile, the one or more aspects including at least one of: audio and/or visual data associated with the scene, a playback speed of the scene, an order of the scene with respect to other scenes of the instructional video, and whether the scene is to be included in a resulting instructional video.

In some embodiments, the method may further comprise generating the resulting instructional video, the resulting instructional video including the modified scene.

In some embodiments, modifying one or more aspects of the acquired scene may comprise modifying at least one of:
audio and/or visual data associated with the scene, a playback speed of the scene, and an order of the scene with respect to other scenes of the instructional video.

In these embodiments, the method may further comprises outputting the modified scene via a display unit.

In some embodiments, modifying one or more aspects of the acquired scene may comprise determining that the acquired scene is not to be included in the resulting instructional video.

In these embodiments, the method may further comprise:
acquiring a next scene of the instructional video;
and modifying one or more aspects of the next scene.

In some embodiments, modifying audio and/or visual data associated with the scene may comprise modifying at least one of voiceover data for the scene and a text overlay data for the scene.

In some embodiments, the acquired scene may contain a scene tag indicative of one or more scene characteristics, the one or more scene characteristics comprising at least one of: a food ingredient, a dietary preference, a food ingredient preference, a recipe step, a food preparation device type, a food preparation utensil type, and a cooking skill level. In these embodiments, modifying one or more aspects of the acquired scene may be based on comparison of a profile characteristic of the user profile with the one or more scene characteristics of the scene tag.

In some embodiments, the acquired scene may include a plurality of versions, each of the plurality of versions containing a respective version tag indicative of one or more version characteristics, and the one or more version characteristics comprising at least one of:
a food ingredient, a dietary preference, a food ingredient preference, a recipe step, a food preparation device type, a food preparation utensil type, and a cooking skill level. In these embodiments, modifying one or more aspects of the acquired scene may comprise:
selecting a version of the scene based on comparison of the profile characteristics of the user profile with the version characteristic of each version for the scene.

In these embodiments, the selected version is included in the resulting instructional video and the non-selected versions are not included in the resulting instructional video.

In some embodiments, at least one of the one or more first characteristics and the one or more second characteristic may comprise at least one of:
a food preparation device available to the user and a food preparation utensil available of the user. In these embodiments, the method may further comprise:
determining the food preparation device or the food preparation utensil available to the user corresponds to a food preparation device type or a food preparation utensil type indicative by a version characteristic or a scene characteristic;
and outputting, via a display unit, an indication if it is determined that the food preparation device or the food preparation utensil available to the user corresponds to a food preparation device or a food preparation utensil type indicative by a version characteristic or a scene characteristic.

In some embodiments, generating or updating the user profile may comprise:
determining, based on the acquired scene and/or another scene of the instructional video, at least one of: a technique applied by an instructor for a food preparation action, and a time spent by an instructor for a food preparation action;
comparing at least one of a technique applied by the user for the food preparation action and a time spent by the user for the food preparation action with those determined for the instructor, the technique applied by the user for the food preparation action and/or the time spent by the user for a food preparation action being extracted from the acquired sensor data; and classifying, as a profile characteristic of the user profile, a cooking skill level of the user based on results of the comparison.
In some embodiments, the method may further comprise:
determining, based on the acquired scene and/or another scene of the instructional scene, at least one of:
a technique applied by an instructor for a food preparation action, and a time spent by an instruction for a food preparation action;
comparing at least one of a technique applied by the user for the food preparation action and a time spent by the user for a food preparation action with those determined for the instructor, the technique applied by the user for the food preparation action and/or the time spent by the user for a food preparation action being extracted from the acquired sensor data;
and determining, based on results of the comparison, at least one of: a recipe preparation score, a food preparation action score, and audio and/or visual guidance to be provided to the user, the guidance being associated with the technique for the food preparation action.

In some embodiments, determining at least one of: a food preparation device available to the user, a food preparation utensil available to the user, a technique applied by the user for a food preparation action, a time spent by the user for a food preparation action, an emotional status of the user, and an environmental status of the user may comprise performing at least one of: image processing of the sensor data, audio processing of the sensor data, motion analysis of the sensor data, and connectivity analysis based on the sensor data.

In some embodiments, performing image processing of the sensor data may comprise performing at least one of: facial recognition based on image data, object recognition based on image data, and natural language processing based on image data.
In some embodiments, performing audio processing of the sensor data may comprise performing natural language processing based on audio data.

In some embodiments, acquiring user input data may comprise extracting the user input data from user survey and/or user questionnaire.

According to a second specific aspect, there is provided a system for personalizing an instructional video. The system comprises: a first acquiring unit configured to acquire sensor data associated with at least one of a food preparation session of a user and a calibration session of the user or of an environment of the user; a determining unit configured to determine, based on the sensor data, one or more first characteristics, the one or more first characteristics including at least one of:
food preparation device available to the user, a food preparation utensil available to the user, a technique applied by the user for a food preparation action, a time spent by the user for a food preparation action, an emotional status of the user, and an environmental status of the user; a second acquiring unit configured to acquire user input data associated with one or more second characteristics, the one or more second characteristics including at least one of:
a food allergy of the user, a dietary preference of the user, an ingredient preference of the user, a preferred portion size of the user, a food preparation device available to the user, a food preparation utensil available of the user; a profile unit configured to generate or update a user profile based on the acquired sensor data and user input data, the user profile including one or more profile characteristics, the one or more profile characteristics including at least a first characteristic and a second characteristic; a third acquiring unit configured to acquire at least one scene of an instructional video; and a modifying unit configured to modify one or more aspects of the at least one acquired scene based on the user profile, the one or more aspects including at least one of: audio and/or visual data associated with the scene, a playback speed of the scene, an order of the scene with respect to other scenes of the instructional video, and whether the scene is to be included in a resulting instructional video.

These and other aspects will be apparent from and elucidated with reference to the embodiment(s) described hereinafter.

According to embodiments of the present disclosure, there is provided a technique for adapting a cooking instruction video by automatically selecting or inserting specific instruction scenes that are applicable to the viewer's skill level regarding specific subtasks, as is being derived from processing the video and/or audio signals recorded of the viewer while they are following the original cooking instruction video during meal preparation.

Such a personalized cooking guidance video would reduce the need for a user to pause, or rewind, or fast-forward a video frequently during meal preparation. Moreover, the personalization may involve removing certain parts of the cooking guidance video that are not applicable to the preferences of the specific user so as to reduce the required human-computer interaction and thereby computer resources in the provision of personalized cooking guidance.

According to embodiments of the present disclosure, user data used for deriving task-specific skill level information can be obtained from audio and/pr video information derived from sensors that are available in the kitchen, e.g. in the mobile display providing the cooking guidance (microphone, camera), or from other connected speakers, cameras, or from connected appliances.

### BRIEF DESCRIPTION OF THE DRAWINGS

Exemplary embodiments will now be described, by way of example only, with reference to the following drawings, in which:
Fig. 1 shows a schematic representation of a meal preparation area which includes an interactive device for providing relevant instructions;
Fig. 2 is a block diagram of a system for personalizing an instructional video; and
Fig. 3 is a flow chart for a computer-implemented method for personalizing an instructional video.

### DETAILED DESCRIPTION OF EMBODIMENTS

As noted above, there is provided an improved method and system for personalizing an instructional video, which address the existing problems. According to some embodiments of the present disclosure, there is provided techniques for adapting the content of long-format videos to the task-specific skill level of the user.

Typically, an instructional video is displayed via a mobile device or laptop (which includes a camera and a mic). While a user is following the instructions of the chef in the video, his/her own actions and skills can be analyzed from the user video using data from these sensors, by computer vision, sound processing and/or natural language processing.

A cooking guidance video typically consists of a sequence of scenes/segments, describing consecutive steps in the meal preparation process via visuals and spoken instructions, sometimes combined with textual overlays. According to some embodiments of the present disclosure, a "standard" instructional video may be used initially as a starting point, "standard" referring to a version which includes scenes that are likely to be included for an average user in terms of cooking skill level, food ingredient preferences, etc. Through updating of the user profile(s), the cooking skill level (and other characteristics) associated with the user may become clearer, and the "standard" video can then be adapted to the cooking skill level (and/or other characteristic(s)) associated with the user, by adding scenes from a database (e.g. where the user has a lower cooking skill level), or removing upcoming scenes (e.g. where the user has a higher cooking skill level).

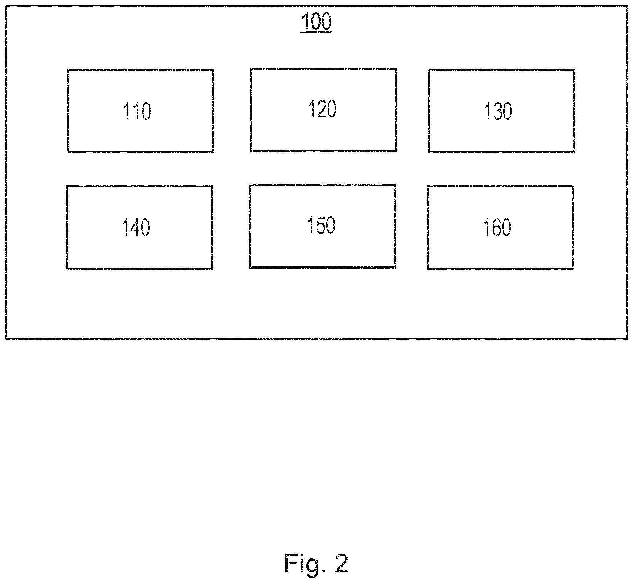

Fig. 2 is a block diagram of a system 100 for personalizing an instructional video. As shown in Fig. 2, the system 100 comprises a first acquiring unit 110, a determining unit 120, a second acquiring unit 130, a profile unit 140, a third acquiring unit 150, and a modifying unit 160. The connections between the components of the system 100 can be implemented wirelessly. Furthermore, in some embodiments at least some connections between the components of the system 100 can be switchable between wired and wireless.

The first acquiring unit 110 is configured to acquire sensor data associated with at least one of a food preparation session of a user and a calibration session of the user or of an environment of the user. The food preparation session of a user may be a current cooking session of the user. The sensor data for the food preparation session may then be video data of the current cooking session. The calibration session may be, for example, a cooking session performed by the user previously. The sensor data for the calibration session may then be video data of the previous cooking session. Sensor data may be data from camera(s), accelerometer(s), etc.

The determining unit 120 is configured to determine, based on the sensor data acquired by the first acquiring unit 110, one or more first characteristics. The one or more first characteristics include at least one of: food preparation device available to the user, a food preparation utensil available to the user, a technique applied by the user for a food preparation action (e.g. cutting, seasoning, stirring, etc.), a time spent by the user for a food preparation action, an emotional status of the user, and an environmental status of the user. For example, acquired data from an accelerometer of a food preparation device may be used to determine what food preparation has been completed. As another example, audio data can be analyzed to identify auditory cues such as sighing and cursing to determine the emotional status of the user (e.g. "frustrated"), which in turn may be indicative of the progress of the user in performing a food preparation action. As yet another example, image/video data can be analyzed to identify a number of pots on the stove, whether there are already food ingredients on the chopping board, whether there are noises made by a food preparation device that is indicative of a certain food preparation action being performed, etc.

In some embodiments, the determining unit 120 may be configured to determine at least one of: a food preparation device available to the user, a food preparation utensil available to the user, a technique applied by the user for a food preparation action, a time spent by the user for a food preparation action, an emotional status of the user, and an environmental status of the user by performing at least one of: image processing of the sensor data, audio processing of the sensor data, motion analysis of the sensor data, and connectivity analysis based on the sensor data. In these embodiments, the determining unit 120 may perform image processing of the sensor data by performing at least one of: facial recognition based on image data, object recognition based on image data, and natural language processing based on image data. For example, using image processing techniques (and more specifically, motion analysis techniques), a specific food preparation action such as cutting, or frying, can be recognized/identified. Furthermore, in some embodiments, the determining unit 120 may perform audio processing of the sensor data by performing natural language processing based on audio data. For example, audio data from sensor(s) can be used to determine whether the user may be experiencing difficulties (e.g. panting, talking, etc.). Also, audio data from sensor(s) can be used to determine auditory cadence of food preparation actions (E.g. consistency of chopping sounds for a chopping action). The second acquiring unit 130 is configured to acquire user input data associated with one or more second characteristics. The one or more second characteristics include at least one of: a food allergy of the user, a dietary preference of the user, an ingredient preference of the user, a preferred portion size of the user, a food preparation device available to the user, a food preparation utensil available of the user, a desired cooking skill level, and a previous user input. For example, a previous user input overruling a modification of a scene may be a second characteristic which can influence whether a next scene is modified and/or how it is modified. In some embodiments, the one or more second characteristics may also include a self-assessed cooking skill level indicated by the user.

In some embodiments, the second acquiring unit 120 may be configured to acquire user input data by extracting the user input data from user survey and/or user questionnaire. The profile unit 140 is configured to generate or update a user profile based on the acquired sensor data and user input data. The user profile includes one or more profile characteristics, and the one or more profile characteristics include at least a first characteristic and a second characteristic.

In some embodiments, the profile unit 140 may be configured to generate or update the user profile by: determining, based on the acquired scene and/or another scene of the instructional video, at least one of: a technique applied by an instructor for a food preparation action, and a time spent by an instructor for a food preparation action, comparing at least one of a technique applied by the user for the food preparation action and a time spent by the user for the food preparation action with those determined for the instructor, the technique applied by the user for the food preparation action and/or the time spent by the user for a food preparation action being extracted from the acquired sensor data, and classifying, as a profile characteristic of the user profile, a cooking skill level of the user based on results of the comparison.

The third acquiring unit 150 is configured to acquire at least one scene of an instructional video. This instructional video may have been created, for example, by a professional chef for the purpose of providing guidance. It will be understood that even though the first acquiring unit 110, the second acquiring unit 130, and the third acquiring unit 150 are illustrated in Fig. 2 as separate components, in some embodiments, more than one of these acquiring units may be implemented as a single component (e.g. first and third acquiring units implemented as a single component, or all of the first, second, and third acquiring units implemented as a single component).

The modifying unit 160 is configured to modify one or more aspects of the at least one acquired scene based on the user profile, the one or more aspects including at least one of: audio and/or visual data associated with the scene, a playback speed of the scene (e.g. "play at 1x speed", "play at 2x speed", "play at 4x speed" etc.), an order of the scene with respect to other scenes of the instructional video, and whether the scene is to be included in a resulting instructional video.

In some embodiments, the modifying unit 160 may be configured to modify the one or more aspects of the acquired scene by modifying at least one of: audio and/or visual data associated with the scene, a playback speed of the scene, and an order of the scene with respect to other scenes of the instructional video. In these embodiments, the system 100 may further comprise an outputting unit configured to output the modified scene via a display unit. The display unit may also be part of the system 100, or it may be a component of an external entity.

In some embodiments, the modifying unit 160 may be configured to modify one or more aspects of the acquired scene by determining that the acquired scene is not to be included in the resulting instructional video. In these embodiments, the third acquiring unit 150 may be further configured to acquire a next scene of the instructional video, and the modifying unit 160 may be configured to modify one or more aspects of the next scene.

In some embodiments, the modifying unit 160 may be configured to modify audio and/or visual data associated with the scene by modifying at least one of voiceover data for the scene and a text overlay data for the scene.

In some embodiments, the scene acquired by the third acquiring unit 150 may contain a scene tag indicative of one or more scene characteristics, the one or more scene characteristics comprising at least one of: a food ingredient, a dietary preference, a food ingredient preference, a recipe step, a food preparation device type, a food preparation utensil type, and a cooking skill level. For example, scenes may be tagged with labels such as "core scene for all skill levels", "extra for lower skill users", "deletable for expert skill level technique users"). In these embodiments, the modifying unit 160 may be configured to modify one or more aspects of the acquired scene based on comparison of a profile characteristic of the user profile with the one or more scene characteristics of the scene tag. For example, if a profile characteristic of the user profile indicates that the user has expert cooking skill level, a scene tagged with the label "deletable for expert skill level technique users" would not be included in the resulting instructional video. As another example, if a profile characteristic of the user profile indicates that the user has a lower cooking skill level, then a scene tagged with "extra for lower skill users" would be included in the resulting instructional video.

In some embodiments, the scene acquired by the third acquiring unit 150 may include a plurality of versions, each of the plurality of versions containing a respective version tag indicative of one or more version characteristics, and the one or more version characteristics comprising at least one of: a food ingredient, a dietary preference, a food ingredient preference, a recipe step, a food preparation device type, a food preparation utensil type, and a cooking skill level. In these embodiments, the modifying unit 160 may be configured to modify one or more aspects of the acquired scene by selecting a version of the scene based on comparison of the profile characteristics of the user profile with the version characteristic of each version for the scene. Furthermore, in these embodiments, the selected version is included in the resulting instructional video and the non-selected versions may not be included in the resulting instructional video.

In some embodiments, the system 100 may further comprise a generating unit configured to generate the resulting instructional video, the resulting instructional video including the modified scene.

In some embodiments, at least one of the one or more first characteristics and the one or more second characteristic may comprise at least one of: a food preparation device available to the user and a food preparation utensil available of the user. In these embodiments, the determining unit 120 may be further configured to determine the food preparation device or the food preparation utensil available to the user corresponds to a food preparation device type or a food preparation utensil type indicative by a version characteristic or a scene characteristic. Also in these embodiments, the system 100 may further comprise a display unit, and upon the determining unit 120 determines the food preparation device or the food preparation utensil available to the user corresponds to a food preparation device type or a food preparation utensil type indicative by a version characteristic or a scene characteristic, an indication may be output by the display unit.

Furthermore, if the determining unit 120 determines that the food preparation device or the food preparation utensil available to the user does not correspond to a food preparation device type or a food preparation utensil type indicative by a version characteristic or a scene characteristic, an indication can be outputted. For example, this indication may be a message stating the missing utensil or device. As another example, this indication may be information associated with alternative technique(s) or method(s) that can be used to accomplish the same or similar effect or result in the recipe (e.g. suggestion to use a knife manually to dice onions if it is determined that a food processor is not available for dicing onions). This indication may also be provided in the form of additional scene(s) to be introduced into the instructional video - such introduction may be done by use of scene tag(s) in a similar manner as described above with reference to scene tag(s). In some embodiments, content can also be offered to promote specific utensil(s) and/or device(s) upon determination that the food preparation device or the food preparation utensil available to the user does not correspond to a food preparation device type or a food preparation utensil type indicative by a version characteristic or a scene characteristic.

In some embodiments, the determining unit 120 may be further configured to determine, based on the acquired scene and/or another scene of the instructional scene, at least one of: a technique applied by an instructor for a food preparation action, and a time spent by an instruction for a food preparation action. Furthermore, in these embodiments, the system 100 may further comprise a comparing unit configured to compare at least one of a technique applied by the user for the food preparation action and a time spent by the user for a food preparation action with those determined for the instructor, the technique applied by the user for the food preparation action and/or the time spent by the user for a food preparation action being extracted from the acquired sensor data. For example, a progress of a food preparation action can be compared between a user and a professional chef (e.g. % of action completed within a certain time frame, e.g. "2 out of 4 carrots cut"). In this case, a high discrepancy between the user and the professional chef in terms of performing an action would result in a lower food preparation action score. As another example, the speed of a certain food preparation action can be compared between a user and a professional chef (e.g. the time it takes to cut an onion). As another example, the accuracy of a certain food preparation action can be compared between a user and a professional chef (e.g. similarity/consistency of cut sizes). As yet another example, a technique for a certain food preparation action can be compared between a user and a professional chef (e.g. how a knife is held).

Also, in these embodiments, the determining unit 120 may be further configured to determine, based on results of the comparison, at least one of: a recipe preparation score, a food preparation action score, and audio and/or visual guidance to be provided to the user, the guidance being associated with the technique for the food preparation action. For example, a food preparation action score may correlate with a difference in timing/consistency/progress between the user and a professional chef. As another example, a food preparation action score may correlate to cooking progress aspects, such as a degree of browning of a food ingredient in a pan. and a recipe preparation score may be an accumulative sum of all the food preparation action scores associated with a respective recipe. In some cases, if based on the comparison it is determined that the user demonstrated a lower skill level for a certain food preparation action, additional instructions and/or guidance (e.g. in the format of a specific video or exercise) may be provided (e.g. via a display unit) for further education and training.

It will be appreciated that Fig. 2 only shows the components required to illustrate an aspect of the system 100 and, in a practical implementation, the system 100 may comprise alternative or additional components to those shown. For example, in some embodiments the system 100 may comprise a power source.

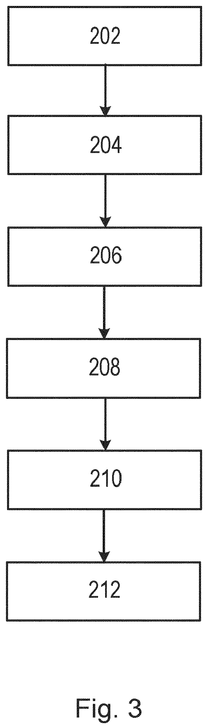

Fig. 3 is a flow chart for a computer-implemented method for personalizing an instructional video. The method illustrated in Fig. 3 may be implemented by a system, such as the system 100 as shown in Fig. 2. In order to facilitate understanding, some of the description below will be made with reference to the various components of the system 100 as shown in Fig. 2. It will be understood that the method described with reference to Fig. 3 can be performed in real-time (for example when the cooking skill level of a user is assessed continuously and scenes can be removed or added immediately) or a priori (for example when the cooking skill level is assessed after a cooking session, and the cooking skill level is then used for modifying a scene in a cooking guidance video subsequently).

With reference to Fig. 3, at block 202, sensor data associated with at least one of a food preparation session of a user and a calibration session of the user or of an environment of the user is acquired. This sensor data may be acquired by the first acquiring unit 110 of the system 100.

Subsequently, at block 204, one or more first characteristics are determined based on the sensor data acquired at block 202. The determination may be performed by the determining unit 120 of the system 100. The one or more first characteristics include at least one of: food preparation device available to the user, a food preparation utensil available to the user, a technique applied by the user for a food preparation action, a time spent by the user for a food preparation action, an emotional status of the user, and an environmental status of the user. It will be understood in some embodiments where real-time construction of an instructional video is required, block 204 may be performed continuously.

In some embodiments, determining at least one of: a food preparation device available to the user, a food preparation utensil available to the user, a technique applied by the user for a food preparation action, a time spent by the user for a food preparation action, an emotional status of the user, and an environmental status of the user at block 204 may comprise performing at least one of: image processing of the sensor data, audio processing of the sensor data, motion analysis of the sensor data, and connectivity analysis based on the sensor data. Performing image processing of the sensor data may comprise performing at least one of: facial recognition based on image data, object recognition based on image data, and natural language processing based on image data. Performing audio processing of the sensor data may comprise performing natural language processing based on audio data.

Returning to Fig. 3, at block 206, user input data associated with one or more second characteristics is acquired. This user input data may be acquired by the second acquiring unit 130 of the system 100. The one or more second characteristics include at least one of: a food allergy of the user, a dietary preference of the user, an ingredient preference of the user, a preferred portion size of the user, a food preparation device available to the user, a food preparation utensil available of the user, a desired cooking skill level, and a previous user input.

Then, at block 208, a user profile is generated or updated based on the acquired sensor data and user input data. The generating or updating operation may be performed by the profile unit 140 of the system 100. The user profile includes one or more profile characteristics, the one or more profile characteristics including at least a first characteristic and a second characteristic.

In some embodiments, generating or updating the user profile at block 208 may comprise determining, based on the acquired scene and/or another scene of the instructional video, at least one of: a technique applied by an instructor for a food preparation action, and a time spent by an instructor for a food preparation action, comparing at least one of a technique applied by the user for the food preparation action and a time spent by the user for the food preparation action with those determined for the instructor, the technique applied by the user for the food preparation action and/or the time spent by the user for a food preparation action being extracted from the acquired sensor data, and classifying, as a profile characteristic of the user profile, a cooking skill level of the user based on results of the comparison.

Returning to Fig. 3, at block 210, at least one scene of an instructional video is acquired. The at least one scene of an instructional video may be acquired by the third acquiring unit 150 of the system 100.

Then, at block 212, one or more aspects of the at least one acquired scene are modified based on the user profile. This modification may be performed by the modifying unit 160 of the system 100. The one or more aspects of the scene include at least one of: audio and/or visual data associated with the scene, a playback speed of the scene, an order of the scene with respect to other scenes of the instructional video, and whether the scene is to be included in a resulting instructional video. In some embodiments, modifying audio and/or visual data associated with the scene at block 212 may comprise modifying at least one of voiceover data for the scene and a text overlay data for the scene.

In some embodiments, modifying one or more aspects of the acquired scene at block 212 may comprise modifying at least one of: audio and/or visual data associated with the scene, a playback speed of the scene, and an order of the scene with respect to other scenes of the instructional video. In these embodiments, the method may further comprise outputting the modified scene via a display unit.

In some embodiments, modifying one or more aspects of the acquired scene at block 212 may comprise determining that the acquired scene is not to be included in the resulting instructional video. In these embodiments, the method may further comprise acquiring a next scene of the instructional video, and modifying one or more aspects of the next scene.

In some embodiments, the scene acquired at block 210 may contain a scene tag indicative of one or more scene characteristics, the one or more scene characteristics comprising at least one of: a food ingredient, a dietary preference, a food ingredient preference, a recipe step, a food preparation device type, a food preparation utensil type, and a cooking skill level. In these embodiments, modifying one or more aspects of the acquired scene at block 212 may be based on comparison of a profile characteristic of the user profile with the one or more scene characteristics of the scene tag.

In some embodiments, the scene acquired at block 210 may include a plurality of versions, each of the plurality of versions containing a respective version tag indicative of one or more version characteristics, and the one or more version characteristics comprising at least one of: a food ingredient, a dietary preference, a food ingredient preference, a recipe step, a food preparation device type, a food preparation utensil type, and a cooking skill level. In these embodiments, modifying one or more aspects of the acquired scene at block 212 may comprises selecting a version of the scene based on comparison of the profile characteristics of the user profile with the version characteristic of each version for the scene. Moreover, in these embodiments, the selected version may be included in the resulting instructional video and the non-selected versions may not be included in the resulting instructional video.

Although not illustrated in Fig. 3, in some embodiments the method may further comprise generating the resulting instructional video. In these embodiments, the resulting instructional video may include the modified scene.

In some embodiments, at least one of the one or more first characteristics and the one or more second characteristic may comprise at least one of: a food preparation device available to the user and a food preparation utensil available of the user. In these embodiments, although not illustrated in Fig. 3, the method may further comprise: determining the food preparation device or the food preparation utensil available to the user corresponds to a food preparation device type or a food preparation utensil type indicative by a version characteristic or a scene characteristic, and outputting, via a display unit, an indication if it is determined that the food preparation device or the food preparation utensil available to the user corresponds to a food preparation device or a food preparation utensil type indicative by a version characteristic or a scene characteristic.

Although not illustrated in Fig. 3, in some embodiments the method may further comprise determining, based on the acquired scene and/or another scene of the instructional scene, at least one of: a technique applied by an instructor for a food preparation action, and a time spent by an instruction for a food preparation action, comparing at least one of a technique applied by the user for the food preparation action and a time spent by the user for a food preparation action with those determined for the instructor, the technique applied by the user for the food preparation action and/or the time spent by the user for a food preparation action is extracted from the acquired sensor data, and determining, based on results of the comparison, at least one of: a recipe preparation score, a food preparation action score, and audio and/or visual guidance to be provided to the user, the guidance being associated with the technique for the food preparation action.

There is thus provided an improved method and system for personalizing an instructional video, which overcome the existing problems.

There is also provided a computer program product comprising a computer readable medium, the computer readable medium having computer readable code embodied therein, the computer readable code being configured such that, on execution by a suitable computer or processor, the computer or processor is caused to perform the method or methods described herein. Thus, it will be appreciated that the disclosure also applies to computer programs, particularly computer programs on or in a carrier, adapted to put embodiments into practice. The program may be in the form of a source code, an object code, a code intermediate source and an object code such as in a partially compiled form, or in any other form suitable for use in the implementation of the method according to the embodiments described herein.

It will also be appreciated that such a program may have many different architectural designs. For example, a program code implementing the functionality of the method or system may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other.

An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A computer-implemented method for personalizing an instructional video, the method comprising:
acquiring (202) sensor data associated with at least one of a food preparation session of a user and a calibration session of the user or of an environment of the user;
determining (204), based on the sensor data, one or more first characteristics, wherein the one or more first characteristics include at least one of: food preparation device available to the user, a food preparation utensil available to the user, a technique applied by the user for a food preparation action, a time spent by the user for a food preparation action, an emotional status of the user, and an environmental status of the user;
acquiring (206) user input data associated with one or more second characteristics, wherein the one or more second characteristics include at least one of: a food allergy of the user, a dietary preference of the user, an ingredient preference of the user, a preferred portion size of the user, a food preparation device available to the user, a food preparation utensil available of the user, a desired cooking skill level, and a previous user input;
generating or updating (208) a user profile based on the acquired sensor data and user input data, wherein the user profile includes one or more profile characteristics, the one or more profile characteristics including at least a first characteristic and a second characteristic;
acquiring (210) at least one scene of an instructional video; and
modifying (212) one or more aspects of the at least one acquired scene based on the user profile, wherein the one or more aspects include at least one of: audio and/or visual data associated with the scene, a playback speed of the scene, an order of the scene with respect to other scenes of the instructional video, and whether the scene is to be included in a resulting instructional video.

2. The method according to claim 1, further comprising generating the resulting instructional video, wherein the resulting instructional video includes the modified scene.

3. The method according to claim 1 or 2, wherein modifying (212) one or more aspects of the acquired scene comprises modifying at least one of: audio and/or visual data associated with the scene, a playback speed of the scene, and an order of the scene with respect to other scenes of the instructional video, and wherein the method further comprises outputting the modified scene via a display unit.

4. The method according to claim 1, wherein modifying (212) one or more aspects of the acquired scene comprises determining that the acquired scene is not to be included in the resulting instructional video, and the method further comprises:
acquiring a next scene of the instructional video; and
modifying one or more aspects of the next scene.

5. The method according to any one of the preceding claims, wherein modifying audio and/or visual data associated with the scene comprises modifying at least one of voiceover data for the scene and a text overlay data for the scene.

6. The method according to any one of the preceding claims, wherein the acquired scene contains a scene tag indicative of one or more scene characteristics, the one or more scene characteristics comprising at least one of: a food ingredient, a dietary preference, a food ingredient preference, a recipe step, a food preparation device type, a food preparation utensil type, and a cooking skill level, and
wherein modifying (212) one or more aspects of the acquired scene is based on comparison of a profile characteristic of the user profile with the one or more scene characteristics of the scene tag.

7. The method according to any one of the preceding claims, wherein the acquired scene includes a plurality of versions, each of the plurality of versions containing a respective version tag indicative of one or more version characteristics, and the one or more version characteristics comprising at least one of: a food ingredient, a dietary preference, a food ingredient preference, a recipe step, a food preparation device type, a food preparation utensil type, and a cooking skill level,
and wherein modifying (212) one or more aspects of the acquired scene comprises:
selecting a version of the scene based on comparison of the profile characteristics of the user profile with the version characteristic of each version for the scene, wherein the selected version is included in the resulting instructional video and the non-selected versions are not included in the resulting instructional video.

8. The method according to claim 6 or claim 7, wherein at least one of the one or more first characteristics and the one or more second characteristic comprises at least one of: a food preparation device available to the user and a food preparation utensil available of the user, and wherein the method further comprises:
determining the food preparation device or the food preparation utensil available to the user corresponds to a food preparation device type or a food preparation utensil type indicative by a version characteristic or a scene characteristic;
and outputting, via a display unit, an indication if it is determined that the food preparation device or the food preparation utensil available to the user corresponds to a food preparation device or a food preparation utensil type indicative by a version characteristic or a scene characteristic.

9. The method according to any one of the preceding claims, wherein generating or updating (208) the user profile comprises:
determining, based on the acquired scene and/or another scene of the instructional video, at least one of: a technique applied by an instructor for a food preparation action, and a time spent by an instructor for a food preparation action;
comparing at least one of a technique applied by the user for the food preparation action and a time spent by the user for the food preparation action with those determined for the instructor, wherein the technique applied by the user for the food preparation action and/or the time spent by the user for a food preparation action is extracted from the acquired sensor data; and
classifying, as a profile characteristic of the user profile, a cooking skill level of the user based on results of the comparison.

10. The method according to any one of the preceding claims, further comprising:
determining, based on the acquired scene and/or another scene of the instructional scene, at least one of: a technique applied by an instructor for a food preparation action, and a time spent by an instruction for a food preparation action;
comparing at least one of a technique applied by the user for the food preparation action and a time spent by the user for a food preparation action with those determined for the instructor, wherein the technique applied by the user for the food preparation action and/or the time spent by the user for a food preparation action is extracted from the acquired sensor data; and
determining, based on results of the comparison, at least one of: a recipe preparation score, a food preparation action score, and audio and/or visual guidance to be provided to the user, wherein the guidance is associated with the technique for the food preparation action.

11. The method according to any one of the preceding claims, wherein determining at least one of: a food preparation device available to the user, a food preparation utensil available to the user, a technique applied by the user for a food preparation action, a time spent by the user for a food preparation action, an emotional status of the user, and an environmental status of the user comprises performing at least one of: image processing of the sensor data, audio processing of the sensor data, motion analysis of the sensor data, and connectivity analysis based on the sensor data.

12. The method according to claim 11, wherein performing image processing of the sensor data comprises performing at least one of: facial recognition based on image data, object recognition based on image data, and natural language processing based on image data.

13. The method according to claim 11 or claim 12, wherein performing audio processing of the sensor data comprises performing natural language processing based on audio data.

14. The method according to any one of the preceding claims, wherein acquiring (206) user input data comprises extracting the user input data from user survey and/or user questionnaire.

15. A system (100) for personalizing an instructional video, the system comprising:
a first acquiring unit (110) configured to acquire sensor data associated with at least one of a food preparation session of a user and a calibration session of the user or of an environment of the user;
a determining unit (120) configured to determine, based on the sensor data, one or more first characteristics, wherein the one or more first characteristics include at least one of: food preparation device available to the user, a food preparation utensil available to the user, a technique applied by the user for a food preparation action, a time spent by the user for a food preparation action, an emotional status of the user, and an environmental status of the user;
a second acquiring unit (130) configured to acquire user input data associated with one or more second characteristics, wherein the one or more second characteristics include at least one of: a food allergy of the user, a dietary preference of the user, an ingredient preference of the user, a preferred portion size of the user, a food preparation device available to the user, a food preparation utensil available of the user;
a profile unit (140) configured to generate or update a user profile based on the acquired sensor data and user input data, wherein the user profile includes one or more profile characteristics, the one or more profile characteristics including at least a first characteristic and a second characteristic;
a third acquiring unit (150) configured to acquire at least one scene of an instructional video; and
a modifying unit (160) configured to modify one or more aspects of the at least one acquired scene based on the user profile, wherein the one or more aspects include at least one of: audio and/or visual data associated with the scene, a playback speed of the scene, an order of the scene with respect to other scenes of the instructional video, and whether the scene is to be included in a resulting instructional video.
